# NEUE EUROPÄISCHE PATENTSCHRIFT

(11) **EP 2 043 880 B3**
(45) Veröffentlichungstag dieser Patentschrift: **26.04.2017**
(45) Hinweis auf die Patenterteilung: 27.06.2012
(21) Anmeldenummer: 07764416.9
(22) Anmeldetag: 29.06.2007
(51) Int. Cl.: B60B 27/00, F16C 33/78, F16J 15/32

(54) **LAGERANORDNUNG EINER ÜBER EIN DREHGELENK ANTREIBBAREN RADNABE EINES KRAFTFAHRZEUGES**
BEARING ARRANGEMENT OF A WHEEL HUB OF A MOTOR VEHICLE THAT CAN BE DRIVEN BY A ROTATING JOINT
SYSTÈME DE PALIER D'UN MOYEU DE ROUE D'UN VÉHICULE, POUVANT ÊTRE ENTRAÎNÉ PAR UN ARTICULATION TOURNANTE

(30) Priorität: 12.07.2006 DE 102006032159
(43) Veröffentlichungstag der Anmeldung: 08.04.2009
(73) Patentinhaber: Schaeffler Technologies AG & Co. KG, 91074 Herzogenaurach (DE)
(72) Erfinder: NIEBLING, Peter, 97688 Bad Kissingen (DE); LANGER, Roland, 97523 Schwanfeld (DE); MASUR, Ernst, 97508 Untereuerheim (DE)
(86) Internationale Anmeldenummer: PCT/DE2007/001163
(87) Internationale Veröffentlichungsnummer: WO 2008/006339

(56) Entgegenhaltungen:
- EP-A- 1 426 257
- EP-A- 1 795 788
- DE-A1- 4 425 732
- DE-A1- 10 009 216
- US-B1- 6 286 909

## Beschreibung

### Gebiet der Erfindung

Die Erfindung betrifft eine Lageranordnung einer über ein Drehgelenk antreibbaren Radnabe eines Kraftfahrzeuges, bei der die mit einem Radflansch verbundene Radnabe und das mit einer Antriebswelle verbundene Drehgelenk mittels einer Verzahnung drehfest miteinander verbunden sind, und mit einem auf der Radnabe aufgezogenen zweireihigen Wälzlager mit zumindest einem separaten, axial außen angeordneten und zum Drehgelenk gerichteten Lagerinnenring, der mit einer axial äußeren Stirnfläche im Bereich eines Endes eines Achsstumpfs der Radnabe angeordnet und durch eine auf die Stirnfläche des separaten Lagerinnenringes einwirkende Radialfläche der Radnabe axial vorgespannt ist, wobei Außenring und Lagerinnenring mit einer Dichtung versehen sind, welche wenigstens einen mit dem Lagerinnenring verbundenen Dichtring mit im Querschnitt jeweils einem radialen Schenkel und einem axialen Schenkel aufweist, wobei der axiale Schenkel drehfest mit dem Lagerinnenring verbunden und nach axial innen gerichtet ist.

### Hintergrund der Erfindung

Bei derartigen Lageranordnungen erfolgt die Sicherung des gelenkseitigen, getrennt ausgebildeten Innenringes bzw. des axial äußeren Innenringes üblicherweise durch eine Kaltumformung an der Nabe, wodurch ein Bord an den Achsstumpf der Radnabe angeformt wird, welcher den Innenringvorspannt und in seiner Lage auf der Radnabe sichert. In dieses Bord kann nach oderwährend des Umformens eine Stirnverzahnung eingebracht werden, welche mit einer korrespondierenden Stirnverzahnung des Gelenks unmittelbar drehfest verbindbar ist.

Eine ähnliche Radlagereinheit ist beispielsweise aus der DE 41 34 434 A1 bekannt, wobei dort die am Bord angeformte Stirnverzahnung zur Erfassung von Raddrehzahlsignalen genutzt wird.

Der Außenring und der separate Innenring sind durch eine Dichtung abgedichtet, wie sie allgemein aus der DE 82 10 552 U1 bekannt ist. Diese Druckschrift beschreibt eine als Spaltdichtung ausgebildete Dichtungsanordnung eines zweireihigen Schrägkugellagers, bei welcher die Spaltdichtung aus zwei aus Blech bestehenden Dichtringen mit jeweils einem radialen und einem axialen Schenkel besteht. Ein Dichtring ist mit dem Außenring und der andere Dichtring ist mit dem Innenring verbunden, wobei der axiale Schenkel des mit dem Außenring verbundenen Dichtrings nach axial außen und der axiale Schenkel des mit dem Innenring verbundenen Dichtring nach axial innen gerichtet ist. In einem Hohlraum zwischen den Dichtringen ist ein elastomeres Dichtungsprofil angeordnet, das mit Dichtlippen an den metallischen Dichtringen anliegt und die eigentliche Abdichtung des Schrägkugellagers herstellt. Derartige Spaltdichtungen mit gegeneinander angestellten Blechringen mit oder ohne Zusatzdichtung im Hohlraum zwischen den Dichtringen haben sich seit langem bewährt.

Es sind schon mehrfach Vorschläge gemacht worden, die Spaltdichtung anders auszugestalten beziehungsweise fürweitere Zwecke zu nutzen. So beschreibt die DE 197 03 832 A1 ein Radlager, bei dem an die axial äußeren Spaltdichtungen zwischen Außenring und Innenring Mikrosensoren in Form von parallelen Kondensatoren in Kammstrukturen angeklebt sind, von denen mindestens einer am drehenden Teil des Lagers angebracht ist und dessen Signale mit abgespeicherten Grundmustern oder mit Signalen eines gleichartigen oder ähnlichen am stehenden Teil des Lagers angeordneten Mikrosensors verglichen und/oder ausgewertet werden. Die an der Spaltdichtung angebrachten Sensoren sollen insbesondere Drehzahl-Signale für ein Antiblockiersystem, ein Antriebsschlupfsystem und/oder für eine dynamische Fahrwerkstabilisierung erfassen.

Die DE 10 2004 044 118 A1 beschreibt eine Radlageranordnung, bei der eine Nabe um die Rotationsachse der Nabe rotierbar in zumindest einem nicht rotierenden Außenring gelagert ist, wobei die Radlageranordnung einen Encoder aufweist. Der Encoder ist an derjenigen Seite der Radlageranordnung nabenseitig fest angeordnet, an der ein Radialflansch radial von der Nabe abgeht, wobei der Encoder mit der Dichtungsanordnung in einer Wirkverbindung steht. Die Radlageranordnung weist an derjenigen Seite der Radlagerung, die dem Radialflansch zugewandt ist, eine Spaltdichtung auf, wobei in der Spaltdichtung zwischen dem Encoder und einem Dichtungselement eine Wirkverbindung besteht. Die Spaltdichtung ist dabei durch wenigstens einen um die Rotationsachse umlaufenden Dichtspalt zwischen dem Encoder und einem Dichtelement der Dichtungsanordnung gebildet. Dort wird also der zum Radflansch gerichtete Dichtring des Außenrings genutzt, um Drehzahl-Signale zu erfassen.

Die gattungsgemäße 44 25 732 A1 beschreibt eine Radlagereinheit einer über ein Drehgelenk antreibbaren Radnabe eines Kraftfahrzeugs, bei der die mit einem Radflansch verbundene Radnabe und einemiteiner Antriebswelle verbundene Gelenkglocke bzw. deren Gelenkzapfen durch eine Axialverzahnung miteinanderverbunden sind. Ein Verbindungselement zwischen dem axial äußeren Innenring und Gelenkglocke verhindert als T-förmige Dichtung nicht nur das Eindringen von Schmutz und Wasser und dadurch das Entstehen von Rost, sondern dient gleichzeitig als axiale Sicherung, Fixierung und Dämpfung ohne aufwendige Fertigung sowie Montage, und kann zusätzlich noch in radialer oder axialer Richtung die Funktion der Signalerzeugung für ein Drehzahlsignal übernehmen. Im Berührbereich zwischen Gelenkglocke und Lagerinnenring ist zur Erreichung von Spielfreiheit eine elastische Ausnehmung oder ein axiales Federelement vorgesehen. Hierzu ist das aus dämpfendem Kunststoff bestehende einstückige Verbindungselement am Umfang mit Vorsprüngen versehen, die in Nuten des Lagerinnenrings und/oder der Gelenkglocke einschnappen. An sich ist dieses eine recht günstige Konstruktion, allerdings ist das im Querschnitt recht kompliziert gestaltete Profil dereinstückigen Dichtung recht komplex, so dass sie sich nurfür bestimmte Baugruppen eignet.

Vorteilhaft bei den bislang bekannten Lösungen ist die Nutzung der Abdichtung zwischen Außenring und Innenring fürweitere Zwecke und Zusatzfunktionen, insbesondere für die Integration von ABS-Encoder-Funktionen, also für eine Drehzahlerfassung in die Dichtung. Jedoch lassen sich bei bekannten Dichtsystemen Zusatzfunktionen in die Dichtung in den meisten Fällen nur durch eine Erhöhung der Teileanzahl oder durch komplizierte Geometrien und somit durch teure Konstruktionen realisieren.

Aus EP 1 795 788 A2, DE 100 09 216 A1 und EP 1 426 257 A2 sind jeweils für nicht angetriebene oder nicht axial angetriebene Radlagereinheiten bekannt, die mit einer Dichtungsanordnung versehen sind, bei derdas Schleuderblech nicht nur im klassischen Dichtungsraum zwischen feststehendem Radlagerteil und Radnabe angeordnet ist, sondern sich axial endseitig radial nach innen fortsetzt und dabei gegebenenfalls einen Deckel aus bildet.

Aus der gattungsgemässen 44 25 732 A1 ist eine radialverzahnte Radlagereinheit mit einem elastischen Dichtungselement zwischen Gelenkglocke und Wälznietbund offenbart, welches sich ebenfalls in den klassischen Dichtungsraum erstreckt und gleichzeitig eine Kassettendichtung ersetzt.

### Aufgabe der Erfindung

Der Erfindung liegt die Aufgabe zugrunde, eine Lageranordnung zu schaffen, deren Dichtring fürZusatzfunktionen nutzbar ist, der einfach herzustellen ist und aus wenigen Einzelteilen besteht.

### Zusammenfassung der Erfindung

Der Erfindung liegt die Erkenntnis zugrunde, dass sich die gestellte Aufgabe auf überraschend einfache Art und Weise dadurch lösen lässt, dass ein aus Blech bestehender Dichtring einen axialen Schenkel mit doppelter Umbiegung aufweist, so dass ein freies, nach axial außen gerichtetes Schenkelende entsteht, welches den Lagerinnenring nach axial außen überragt.

Die Erfindung geht daher aus von einer Lageranordnung einer über ein Drehgelenk antreibbaren Radnabe eines Kraftfahrzeuges, bei der die mit einem Radflansch verbundene Radnabe und das mit einer Antriebswelle verbundene Drehgelenk mittels einer Verzahnung drehfest miteinander verbunden sind, und mit einem auf der Radnabe aufgezogenen zweireihigen Wälzlager mit zumindest einem separaten, axial außen angeordneten und zum Drehgelenk gerichteten Lagerinnenring, der mit einer axial äußeren Stirnfläche im Bereich eines Endes eines Achsstumpfs der Radnabe angeordnet und durch eine auf die Stirnfläche des separaten Lagerinnenringes einwirkende Radialfläche der Radnabe axial vorgespannt ist, wobei der Außenring und der Lagerinnenring mit einer Dichtung versehen sind, welche wenigstens einen mit dem Lagerinnenring verbundenen und aus Blech bestehenden Dichtring mit im Querschnitt jeweils einem radialen Schenkel und einem axialen Schenkel aufweist, wobei der axiale Schenkel drehfest mit dem Lagerinnenring verbunden und nach axial innen gerichtet ist. Zudem ist vorgesehen, dass der axiale Schenkel des Dichtrings des Lagerinnenrings nach radial innen und nach axial außen umgebogen ist, wobei ein freies Ende des axialen Schenkels axial nach außen die Stirnfläche des Lagerinnenrings überragt.

Durch diesen Aufbau wird vorteilhaft erreicht, dass beispielsweise eine zusätzliche Abdichtfunktion einer Axialverzahnung oder auch Radialverzahnung bei angetriebenen Radlagern durch eine einfache axiale Verlängerung des inneren Blechschenkels der Dichtung erreicht wird. Der verlängerte Blechschenkel der Dichtung kann aber auch für eine integrierte ABS-Encoder-Funktion genutzt werden. Ein Drehzahl-Signal kann beispielsweise durch einen entsprechend gelochten oder gewellten, also mit Rippen versehenen Blechschenkel in radialer Richtung abgegriffen werden. Weiterhin lässt sich auf das freie Ende des Schenkels entsprechendes Magnetmaterial, beispielsweise auf Basis eines Nitrit-Butyl-Kautschuks (NBR) oder eines Kunststoffs mit magnetischen Füllstoffen aufbringen, und zwar auf einfachste Art und Weise beispielsweise durch Vulkanisation oder eine Klebeverbindung.

Ebenso kann das freie Ende des Schenkels genutzt werden, um die Dichtheit des Blechsitzes der Dichtung auf dem Innenring durch entsprechende, einfach zu realisierende Gestaltung des Blechschenkels zu verbessern. Beispielsweise kann die Sitzfuge durch einen an sich bekannten Wälznietbund, durch die Gelenkwelle oder auch durch die Einbringung einer Dichtmasse zwischen radialen Blechschenkel und Innenring geschlossen werden.

Es wird also auf überraschend einfache Art und Weise eine Lageranordnung geschaffen, die eine Dichtung zwischen Außenring und axial äußerem Lagerinnenring aufweist, die als einstückiges Blechformteil ausgebildet ist und die universell für Zusatzfunktionen verwendbar ist. Dabei ist auch eine Kombination von Funktionen realisierbar. So lässt sich das freie Ende des axialen Schenkels gleichzeitig für eine Abdichtung der Verzahnung und als Signalgeber für Drehzahl-Sensoren nutzen.

Außerdem kann vorgesehen sein, dass das freie Ende des Dichtrings zu einem axial verlaufenden Endschenkel erweitert ist, welcher radial über der Verzahnung und über einem Absatz eines äußeren Gelenkkörpers des Drehgelenks angeordnet ist.

In anderen praktischen Weiterbildungen kann vorgesehen sein, dass an den Endschenkel ein Dichtungsprofil angeformt ist, welches wenigstens am Absatz und/oder an einer Stirnkante des Gelenkkörpers anliegt.

Eine andere Ausgestaltung der Erfindung sieht vor, dass der Endschenkel nach radial innen zu einem Bord abgeknickt ist, welcher zu dem Absatz des Gelenkkörpers aufliegt oder einen Spalt bildet.

Ebenso liegt es im Rahmen der Erfindung vorzusehen, dass in den Endschenkel eine Vielzahl von Ausstanzungen zur Erzeugung von Drehzahl-Signalen eingebracht sind.

Alternativ dazu kann vorgesehen sein, dass aus dem Endschenkel zur Erzeugung von Drehzahl-Signalen von radial innen nach radial außen eine Vielzahl von Rippen herausgedrückt sind.

Besonders vorteilhaft ist ebenso eine Ausgestaltung der Erfindung, die sich dadurch auszeichnet, dass auf dem Endschenkel radial außen ein Profilring angeordnet ist. Diese Ausgestaltung lässtsich auch noch dadurch ergänzen, dass der Profilring axial außen eine Dichtlippe aufweist, welche an der der Radnabe zugeordneten Stirnkante des Gelenkkörpers anliegt.

Andere praktische Ausgestaltungen der Erfindung zeichnen sich dadurch aus, dass der Dichtring aus einem elastomeren oder polymeren Material besteht, in welches ferromagnetische Partikel eingelagert sind.

Ebenfalls im Rahmen der Erfindung liegt es vorzusehen, dass das freie Ende des Dichtrings nach radial innen abgewinkelt ist, wobei ein durch die Abwinklung gebildeter Schenkel mit einer axial inneren Fläche an der Stirnfläche des Lagerinnenrings und mit einer axial äußeren Fläche an der Radialfläche des Bundes der Radnabe anliegt.

Ebenso praktisch ist eine Weiterbildung der Erfindung, bei welcher vorgesehen ist, dass die Verzahnung eine Hirth-Stirnverzahnung mit vorzugsweise mit 40 bis 60 radial verlaufenden Zähnen ist. Alternativ dazu kann auch vorgesehen sein, dass die Verzahnung eine Wellenverzahnung beziehungsweise Axialverzahnung ist.

Besonders vorteilhaft ist schließlich eine Ausgestaltung der Erfindung, die sich dadurch auszeichnet, dass axial außen an den radialen Schenkel des Dichtrings ein Ring angebracht ist, welcher aus einem elastomeren oder polymeren Material besteht, in welches ferromagnetische Partikel eingelagert sind.

### Kurze Beschreibung der Zeichnungen

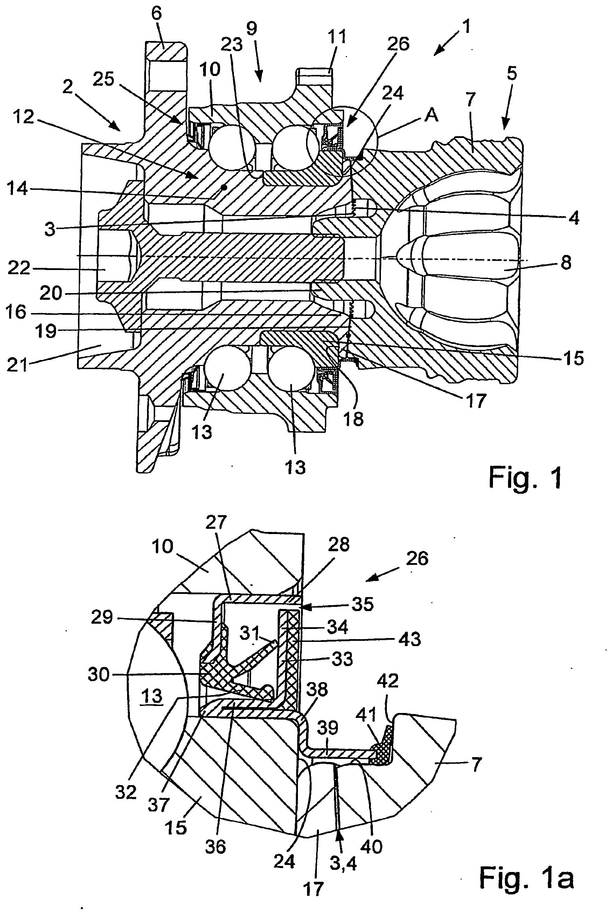

Die Erfindung wird im Folgenden anhand der beiliegenden Zeichnung näher erläutert. Darin zeigt
- Fig. 1: eine Längsschnittansicht durch ein erstes Ausführungsbeispiel einer Lageranordnung gemäß der Erfindung,
- Fig. 1 a: eine Detailansicht aus Fig. 1,

- Fig. 2: eine Längsschnittansicht durch ein zweites Ausführungsbeispiel einer Lageranordnung gemäß der Erfindung,
- Fig. 2a: eine Detailansicht aus Fig. 2,
- Fig. 2b: das Detail aus Fig. 2a in perspektivischer Ansicht,
- Fig. 3: eine Längsschnittansicht durch ein drittes Ausführungsbeispiel einer Lageranordnung gemäß der Erfindung,
- Fig. 3a: eine Detailansicht aus Fig. 3,
- Fig. 3b: das Detail aus Fig. 3a in perspektivischer Ansicht,
- Fig. 4: eine Längsschnittansicht durch ein Detail eines vierten Ausführungsbeispiel einer Lageranordnung gemäß der Erfindung,
- Fig. 5: eine Längsschnittansicht durch ein fünftes Ausführungsbeispiel einer Lageranordnung gemäß der Erfindung, und
- Fig. 5a: eine Detailansicht aus Fig. 5.

### Detaillierte Beschreibung der Zeichnung

In den Figuren 1, 2, 3 und 5 ist jeweils eine Lageranordnung 1 im Längsschnitt dargestellt, wobei für gleiche Bauteile nachfolgend dieselben Bezugsziffern verwendet werden.

Fig. 1 zeigt demnach ein erstes Ausführungsbeispiel einer Lageranordnung 1 im Längsschnitt dargestellt. Die Lageranordnung 1 weist eine Radnabe 2 eines nicht dargestellten Kraftfahrzeuges auf. Die Radnabe 2 ist über eine Stirnverzahnung 3, 4 mit einem äußeren Gelenkkörper 7 eines Antriebsgelenks 5 verbunden. Dieser äußere Gelenkkörper 7 weist in bekannter Konstruktion an seiner radial inneren Mantelfläche Kugellaufbahnen 8 für nicht dargestellte Kugeln auf, die zusätzlich auf radial außen angeordneten Kugellaufbahnen eines ebenfalls nicht gezeigten Gelenkinnenteils abrollen können. Die Radnabe 2 weistzudem an einem axialen Ende einen Radflansch 6 zur Befestigung einer nicht dargestellten Radfelge und einer Bremsscheibe auf.

Auf der Radnabe 2 ist ein zweireihiges Wälzlager 9 in Form eines Schrägkugellagers in O-Anordnung angeordnet. Das Wälzlager 9 weist einen Außenring 10, an den ein Befestigungsflansch 11 angeformt ist, sowie einen Innenring 12 auf. Zwischen Außenring 10 und Innenring 12 sind als Wälzkörper dienende Lagerkugeln 13 angeordnet. Der Innenring 12 besteht aus zwei Lagerinnenringen 14, 15, wobei ein axial äußere Lagerinnenring 14 einstückig an die Radnabe 2 angeformt ist, während ein axial innere Lagerinnenring 15 ein separates Bauteil ist, welches auf einen Achsstumpf 16 der Radnabe 2 aufgeschoben ist. Der Achsstumpf 16 weist einen sich im Wesentlichen radial erstreckenden Bund 17 mit einer axial inneren Radialfläche 18 auf, welche als Anschlag für den separaten Lagerinnenring 15 dient.

An einer axial äußeren Stirnkante 19 des äußeren Gelenkkörpers 7 ist die Stirnverzahnung 4 ausgebildet, die mit der entsprechenden Stirnverzahnung 3 des Achsstumpfes 16 in Eingriff steht. Im Zentrum der Stirnkante 19 des äußeren Gelenkkörpers 7 ist ein Ansatz 20 angebracht, der eine mit Gewinde versehene Bohrung besitzt. In diese Bohrung ist ein von einer zentralen Bohrung 21 der Radnabe 2 her zugänglicher Bolzen 22 eingeschraubt. Diese zentrale Bohrung 21 ist durch eine nicht dargestellte Mittelbohrung der Fahrzeugfelge zugänglich, so dass ein Lösen bzw. Montieren der nicht dargestellten Profilwelle mit dem Drehgelenk 5 von der Fahrzeugaußenseite her möglich ist.

Derseparate Lagerinnenring 15 weist eine axial innere Stirnkante 23 und eine axial äußere Stirnkante 24 auf, welche zum Gelenkkörper 7 gerichtet ist und an der axial inneren Radialfläche 18 des Bundes 17 anliegt. Beim Anziehen des Bolzens 22 werden Radnabe 2 und Gelenkkörper 7 axial gegeneinander bewegt, bis die Stimverzahnungen 3 und 4 in Eingriff miteinander sind.

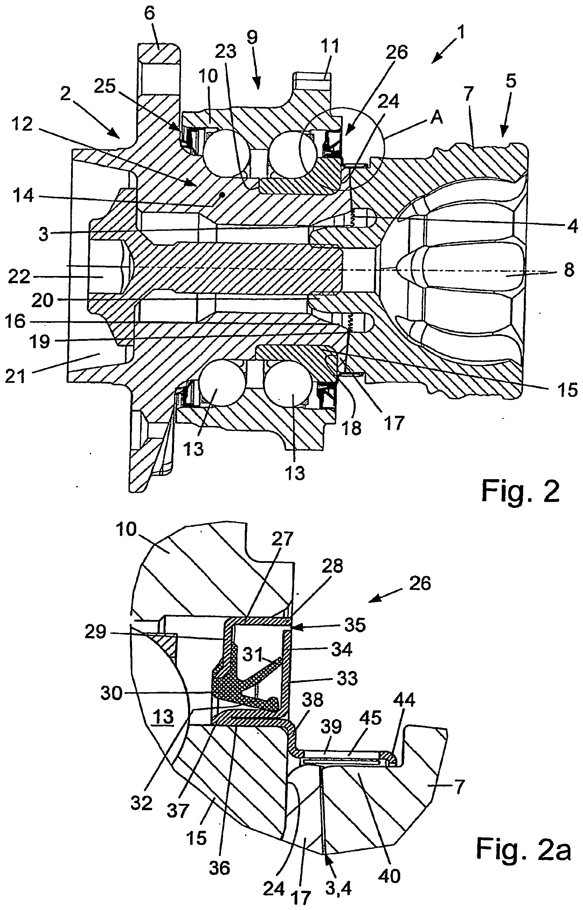

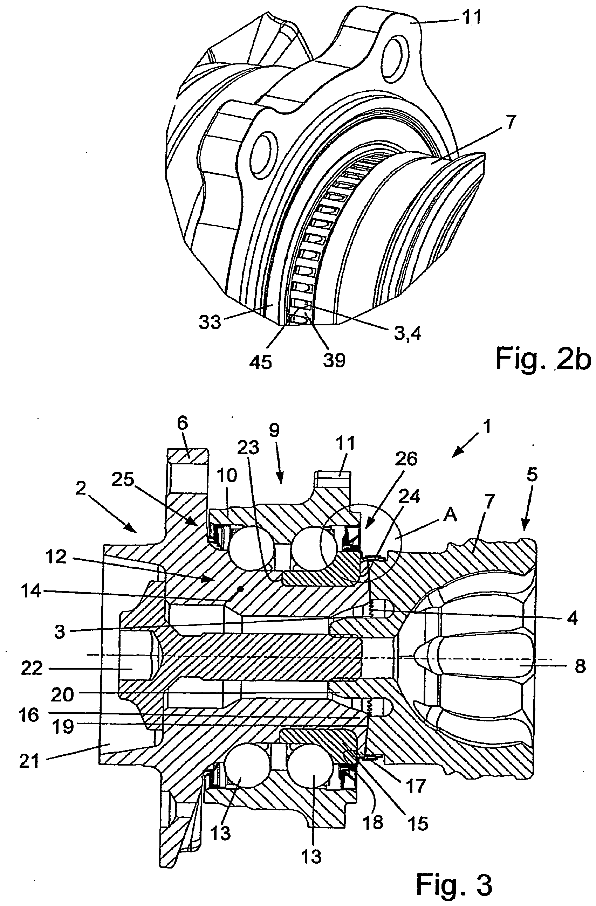

Zwischen dem Außenring 10 und dem Lagerinnenring 14 ist axial innen, zum Radflansch 6 hin gerichtet, eine sich radial erstreckende Dichtung 25 angeordnet, während zwischen dem Außenring 10 und dem separaten Lagerinnenring 15 eine sich im Wesentlichen radial erstreckende Dichtung bzw. Spaltdichtung 26 vorgesehen ist. Die Spaltdichtung 26 ist in Fig. 2 im Detail innerhalb des Kreises A aus Fig. 1 näher dargestellt. Die Spaltdichtung 26 besteht aus einem mit dem Außenring 10 formschlüssig verbundenen, aus Stahlblech bestehenden Dichtring 27 mit einem nach axial außen gerichteten axialen Schenkel 28, sowie aus einem radial verlaufenden Schenkel 29, an dessen Ende ein Dichtungsprofil 30 angeformt ist, dessen Dichtlippen 31 und 32 an einem mit dem Lagerinnenring 15 formschlüssig verbundenen Dichtring 33 anliegen.

Der mit dem Lagerinnenring 15 verbundene Dichtring 33 der Spaltdichtung 26 weist einen radialen Schenkel 34 auf, dessen freies Ende unterhalb des axialen Schenkels 28 des Dichtrings 27 unter Verbleib eines Spaltes 35 und in unmittelbarer axialer Nähe zur Stirnfläche 24 des Lagerinnenrings 15 angeordnet ist. Ein mit dem radialen Schenkel 34 verbundener axialer Schenkel 36 ist drehfest mit dem Lagerinnenring 15 verbunden, und ist nach axial innen zur Lagerkugel 13 gerichtet. Der axiale Schenkel 36 ist an einer Knickstelle 37 axial und radial umgebogen, so dass der Schenkel 36 eine Richtungsänderung nach axial außen erfährt und ein freies Ende 38 erhält, welches axial nach außen die Stirnfläche 24 des Lagerinnenrings 15 überragt. Im Ausführungsbeispiel gemäß Fig. 1 und Fig. 1 a ist das freie Ende 38 des Dichtrings 33 doppelt abgewinkelt, und zwar nach radial innen und nach axial außen zum Drehgelenk 5 hin, so dass ein axial verlaufender Endschenkel 39 radial über der Stirnverzahnung 3, 4 und über einem Absatz 40 im äußeren Gelenkkörper 7 angeordnet ist. An den Endschenkel 39 ist ein Dichtungsprofil 41 angeformt, welches am Absatz 40 und an einer Stirnkante 42 des Gelenkkörpers 7 anliegt. Auf diese Weise ist die Stirnverzahnung 3, 4 gegen das Eindringen von Schmutz geschützt. Der Dichtring 33 dichtet also nicht nur das Wälzlager 9 nach axial außen ab, er übernimmt auch noch eine zusätzliche Funktion durch die Abdichtung der Stirnverzahnung 3, 4.

An den radialen Schenkel 34 des Dichtrings 33 ist axial außen ein Ring 43 angebracht, welcher aus einem elastomeren oder polymeren Material besteht. In das Material des Ringes 43 sind ferromagnetische Partikel eingelagert, welche zur Erzeugung von Drehzahl-Signalen durch einen entsprechend ausgebildeten Sensor nutzbar sind.

In Fig. 2 ist ein zweites Ausführungsbeispiel einer erfindungsgemäßen Lageranordnung 1 dargestellt, die weitgehend der in Fig. 1 dargestellten entspricht. Lediglich die Spaltdichtung 26 ist anders ausgeführt und wird in Fig. 2a anhand eines Details innerhalb des Kreises A aus Fig. 2 näher dargestellt. Die Spaltdichtung 26 besteht wie bei dem Ausführungsbeispiel nach Fig. 1 aus einem mit dem Außenring 10 verbundenen, aus Stahlblech bestehenden Dichtring 27 mit einem nach axial außen gerichteten axialen Schenkel 28 und einem radial verlaufenden Schenkel 29, an dessen Ende ein Dichtungsprofil 30 angeformt ist, dessen Dichtlippen 31, 32 an einem mit dem Lagerinnenring 15 formschlüssig verbundenen Dichtring 33 anliegen.

Ebenso weist der mit dem Lagerinnenring 15 formschlüssig verbundene Dichtring 33 der Spaltdichtung 26 einen radialen Schenkel 34 auf, dessen freies Ende unterhalb des axialen Schenkels 28 des Dichtrings 27 unter Verbleib eines Spaltes 35 und in unmittelbarer axialer Nähe zur Stirnfläche 24 des Lagerinnenrings 15 angeordnet ist. Im Gegensatz zum Ausführungsbeispiel nach den Figuren 1 und 1 a fluchtet die Außenweite des radialen Schenkels 34 axial mit der Stirnfläche 24 des Lagerinnenrings 15. Ein mit dem radialen Schenkel 34 verbundener axialer Schenkel 36 ist drehfest mit dem Lagerinnenring 15 verbunden und nach axial innen zur Lagerkugel 13 gerichtet. Der axiale Schenkel 36 ist zudem an einer Knickstelle 37 axial und radial umgebogen, so dass der Schenkel 36 eine Richtungsänderung nach axial außen erfährt und ein freies Ende 38 erhält, welches axial nach außen die Stirnfläche 24 des Lagerinnenrings 15 überragt.

Im Ausführungsbeispiel nach Fig. 2 und Fig. 2a ist das freie Ende 38 des Dichtrings 33 ebenfalls doppelt abgewinkelt, und zwar nach radial innen und nach axial außen zum Drehgelenk 5 hin, so dass ein axial verlaufender Endschenkel 39 radial über der Verzahnung 3, 4 und über einem Absatz 40 im äußeren Gelenkkörper 7 angeordnet ist. Der Endschenkel 39 ist nach radial innen zu einem radial nach innen weisenden Bord 44 abgeknickt, welches auf dem Absatz 40 aufliegt. In den Endschenkel 39 ist eine Vielzahl von Ausstanzungen 35 eingebracht, welche der Erzeugung von Drehzahl-Signalen dienen. Die Ausstanzungen 45 können derart in den Endschenkel 39 eingebracht sein, dass Metallteile komplett aus dem Dichtring 33 ausgestanzt sind, oder nur Stanzschnitte in den Dichtring 33 ausgeführt werden, und zwar derart, dass die so entstehenden Blechzungen nach radial innen gedrückt werden, aber über ein Metall-Filmscharnier noch mit dem Dichtring 33 verbunden sind.

In Fig. 2b ist derDichtring 33 in perspektivischer Ansicht dargestellt. Zu erkennen sind dort insbesondere die Ausstanzungen 45, durch welche die Verzahnungen 3, 4 erkennbar sind. Bei einer Rotation der Radnabe 2 und damit des Lagerinnenrings 25 erfasst ein geeigneter Encoder die Bewegung der Ausstanzungen 45 und leitete diesbezügliche Drehzahlsignale in an sich bekannter Weise an ein Steuerungsgerät für beispielsweise ein Antiblockiersystem weiter.

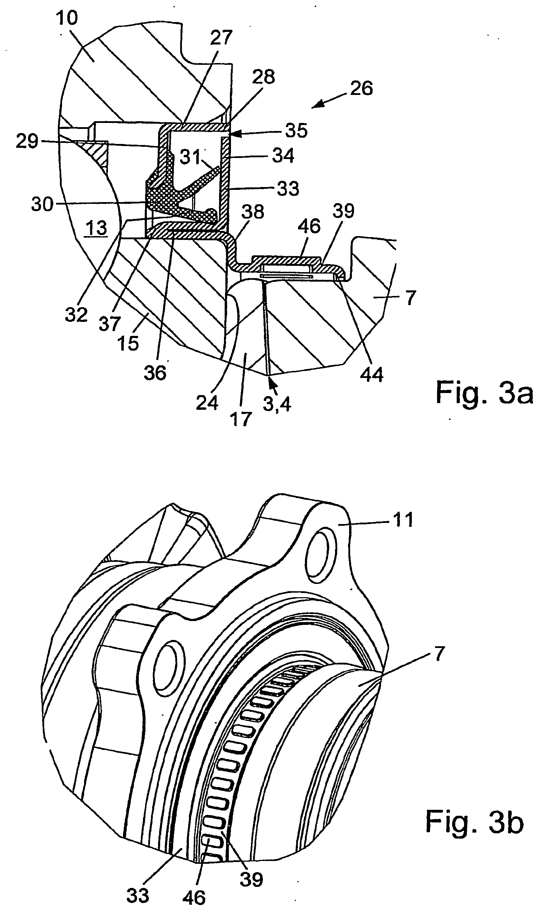

In Fig. 3 ist ein drittes Ausführungsbeispiel einer erfindungsgemäßen Lageranordnung 1 dargestellt, die weitgehend der in Fig. 2 gezeigten Lageranordnung entspricht. Lediglich die Spaltdichtung 26 ist anders ausgeführt und ist in Fig. 3a anhand eines Details innerhalb des Kreises A aus Fig. 3 genauer abgebildet. Der Dichtring 33 der Spaltdichtung 26 entspricht dabei weitgehend dem Dichtring 33 gemäß den Figuren 2a und 2b. Aus dessen Endschenkel 39 sind mit einem geeigneten Umformwerkzeug von radial innen nach radial außen eine Vielzahl von Rippen 46 herausgedrückt worden, welche in Fig. 3b in perspektivischer Ansicht dargestellt sind. Auch diese Rippen 46 dienen der Erfassung von Drehzahlsignalen durch einen zugeordneten Drehzahlsensor bei einer Rotation der Radnabe 2 und des Gelenkkörpers 7. Weil durch das Ausformen der Rippen 46 aus dem Endschenkel 39 aber keine Löcher entstehen, kann der Endschenkel 39 auch eine Dichtfunktion erfüllen, da der Endschenkel 39 die Stirnverzahnung 3, 4 vollständig überdeckt.

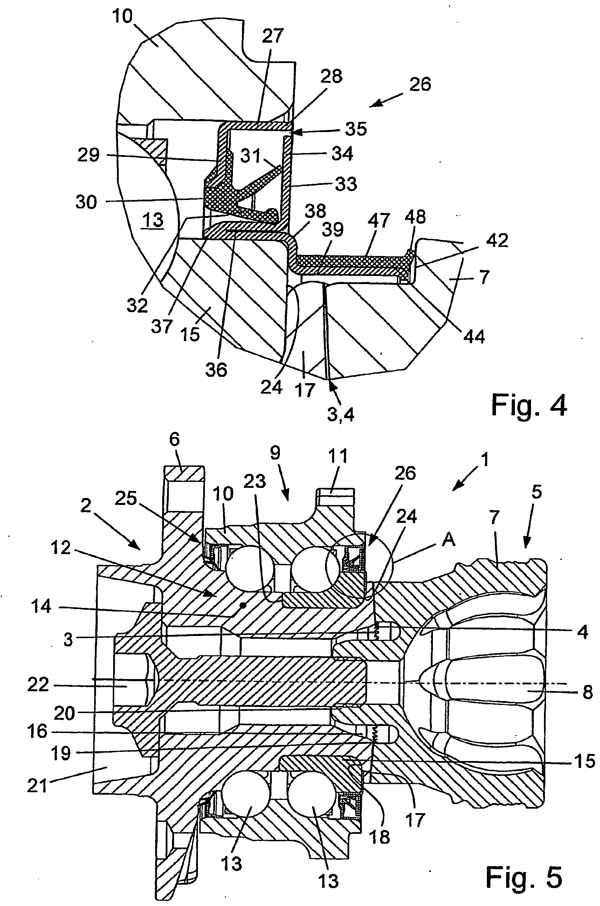

In Fig. 4 ist ein Detail eines vierten Ausführungsbeispiels einer erfindungsgemäßen Lageranordnung 1 dargestellt, die weitgehend den in den Fig. 2a und Fig. 3a dargestellten Ausführungsbeispielen entspricht. Der Endschenkel 39 des Dichtrings 33 der Spaltdichtung 26 verläuft axial gerade und weist keine Ausstanzungen, Vertiefungen oder Erhebungen auf. Auf dem Endschenkel 39 ist ein Profilring 47 angeordnet, welcher auf den Endschenkel 39 aufgeklebt oder auf sonstige geeignete Weise mit dem Endschenkel 39 verbunden sein kann. Der Profilring 47 weist axial außen eine Dichtlippe 48 auf, welche an der Stirnkante 42 des Gelenkkörpers 7 anliegt und somit die Stirnverzahnung 3, 4 gegen das Eindringen von Schmutz schützt.

Der Dichtring 47, 48 besteht aus einem geeigneten Magnetmaterial, beispielsweise aus Nitrit-ButylKautschuk (NBR), in den ferromagnetische Partikel eingemischt sind.

Der Dichtring 47, 48 kann aber auch aus einem Kunststoffmaterial mit anderen geeigneten magnetischen Füllstoffen bestehen. Diese magnetischen Füllstoffe dienen der Erfassung von Drehzahlsignalen, etwa für die bereits beschriebenen Anwendungsfälle.

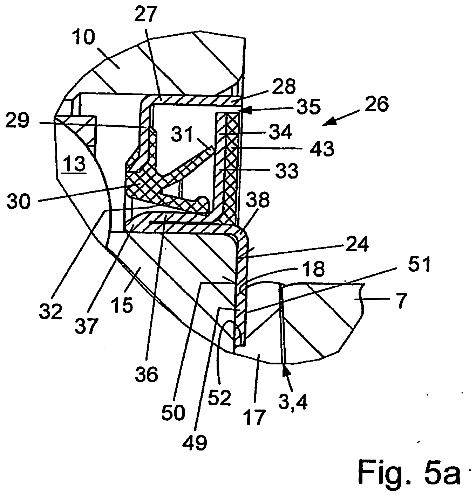

In Fig. 5 ist ein fünftes Ausführungsbeispiel einer erfindungsgemäßen Lageranordnung 1 dargestellt, die weitgehend der in Fig. 1 dargestellten entspricht. Lediglich die Spaltdichtung 26 ist anders ausgeführt und ist in Fig. 5a anhand eines Details innerhalb des Kreises A aus Fig. 5 näher dargestellt. Die Spaltdichtung 26 besteht wie bei dem Ausführungsbeispiel nach Fig. 1 aus einem mit dem Außenring 10 verbundenen, aus Stahlblech bestehenden Dichtring 27 mit einem nach axial außen gerichteten axialen Schenkel 28 und einem radial verlaufenden Schenkel 29, an dessen Ende ein Dichtungsprofil 30 angeformt ist, dessen beiden Dichtlippen 31 und 32 an einem mit dem Lagerinnenring 15 verbundenen Dichtring 33 anliegen.

Ebenso weist der mit dem Lagerinnenring 15 verbundene Dichtring 33 einen radialen Schenkel 34 auf, dessen freies Ende unterhalb des axialen Schenkels 28 des Dichtrings 27 unter Verbleib eines Spaltes 35 und in unmittelbarer axialer Nähe zur Stirnfläche 24 des Lagerinnenrings 15 angeordnet ist. Wie beim Ausführungsbeispiel nach den Figuren 1 und 1 a fluchtet die Außenseite des radialen Schenkels 34 nicht mit der Stirnfläche 24 des Lagerinnenrings 15. Ein mit dem radialen Schenkel 34 verbundener axialer Schenkel 36 ist drehfest mit dem Lagerinnenring 15 verbunden sowie nach axial innen zur Lagerkugel 13 gerichtet. Der axiale Schenkel 36 ist an einer Knickstelle 37 axial und radial umgebogen, so dass der Schenkel 36 eine Richtungsänderung nach axial außen erfährt und ein freies Ende 38 erhält, welches nach axial außen die Stirnfläche 24 des Lagerinnenrings 15 überragt.

An den radialen Schenkel 34 des Dichtrings 33 ist ebenfalls entsprechend dem Ausführungsbeispiel nach den Figuren 1 ein Ring 43 angebracht, welcher aus einem elastomeren oder polymeren Material besteht. In das Material des Ringes 43 sind ferromagnetische Partikel eingelagert, welche zur Erfassung von ABS-Signalen nutzbar sind.

Im Ausführungsbeispiel gemäß Fig. 5 und Fig. 5a ist das freie Ende 38 des Dichtrings 33 einfach nach radial innen abgewinkelt, und zwar derart, dass ein nach radial innen ragender Schenkel 49 gebildet ist, so dass der Dichtring 33 ein im Wesentlichen T-förmiges Schnittprofil aufweist. Der Schenkel 49 liegt mit einer axial inneren Fläche 50 an der Stirnfläche 24 des Lagerinnenrings 15 und mit einer axial äußeren Fläche 51 an der Radialfläche 18 des Bundes 17 an.

Die Abwinklung des freien Endes 38 zum Schenkel 49 findet zweckmäßigerweise während des Umformens des Bundes 17 statt. Hierbei wird in an sich bekannter Weise durch ein Wälznietverfahren eine axial äußere Stirnkante des Achsstumpfs 16 zum Bund 17 umgeformt, wodurch der Lagerinnenring 15 axial gespannt und am Achsstumpf 16 festgelegt wird.

Dadurch, dass das freie Ende 38 des Dichtrings 33 zwischen Bund 17 und der Stirnfläche 24 des Lagerinnenrings 15 festgeklemmt wird, ist eine sonst nur schwer abdichtbare Sitzfuge 52 zwischen Radialfläche 18 und Stirnfläche 24 des Lagerinnenrings 15 vollständig geschlossen. Gleichzeitig wird die Festigkeit des Sitzes des Dichtrings 33 auf dem Lagerinnenring 15 erhöht. Ebenso wird auch die Dichtwirkung des Dichtrings 33 erhöht, da es nunmehr ausgeschlossen ist, dass Schmutz den Dichtring 33 im Bereich zwischen axialem Schenkel 36 und Lagerinnenring 15 unterwandem kann.

Bei allen fünf Ausführungsbeispielen ist die Stirnverzahnung 3, 4 von Radnabe 2 und Drehgelenk 5 jeweils als Hirth-Stirnverzahnung mit radial verlaufenden Zähnen ausgeführt, wobei die Anzahl der Zähne vorzugsweise zwischen 40 und 60 beträgt. Es liegt jedoch auch im Rahmen der Erfindung, den Dichtring 33 für Lagereinheiten zu verwenden, bei denen Radnabe und Drehgelenk durch eine Wellenverzahnung beziehungsweise Axialverzahnung drehfest miteinander verbunden sind.

### Bezugszeichenliste

- 1: Lageranordnung
- 2: Radnabe
- 3: Stirnverzahnung, Verzahnung
- 4: Stirnverzahnung, Verzahnung
- 5: Antriebsgelenk
- 6: Radflansch
- 7: Äußerer Gelenkkörper
- 8: Kugellaufbahn
- 9: Wälzlager
- 10: Außenring
- 11: Befestigungsflansch
- 12: Innenring
- 13: Lagerkugel
- 14: Lagerinnenring
- 15: Lagerinnenring
- 16: Achsstumpf
- 17: Bund
- 18: Radialfläche
- 19: Stirnkante
- 20: Ansatz
- 21: Bohrung
- 22: Bolzen
- 23: Stirnkante
- 24: Stirnkante
- 25: Dichtung
- 26: Dichtung bzw. Spaltdichtung
- 27: Dichtring
- 28: Axialer Schenkel
- 29: Radialer Schenkel
- 30: Dichtungsprofil
- 31: Dichtlippe
- 32: Dichtlippe

- 33: Dichtring
- 34: Radialer Schenkel
- 35: Spalt
- 36: Axialer Schenkel
- 37: Knickstelle
- 38: Freies Ende
- 39: Endschenkel
- 40: Absatz
- 41: Dichtungsprofil
- 42: Stirnkante
- 43: Ring
- 44: Bord
- 45: Ausstanzung
- 46: Rippe
- 47: Profilring
- 48: Dichtlippe
- 49: Schenkel
- 50: Axial innere Fläche des Schenkels 49
- 51: Axial äußere Fläche des Schenkels 49
- 52: Sitzfuge
- A: Kreis

## Patentansprüche

1. Lageranordnung (1) einer über ein Drehgelenk (5) antreibbaren Radnabe (2) eines Kraftfahrzeuges, bei der die mit einem Radflansch (6) verbundene Radnabe (2) und das mit einer Antriebswelle verbundene Drehgelenk (5) mittels einer Verzahnung (3, 4) drehfest miteinander verbunden sind, wobei die Verzahnung (3, 4) eine Hirth-Stirnverzahnung ist, und mit einem auf der Radnabe (2) aufgezogenen zweireihigen Wälzlager (9) mit zumindest einem separaten, axial außen angeordneten und zum Drehgelenk (5) gerichteten Lagerinnenring (15), der mit einer axial äußeren Stirnfläche (24) im Bereich eines Endes eines Achsstumpfs (16) der Radnabe (2) angeordnet und durch eine auf die Stirnfläche (24) des separaten Lagerinnenringes (15) einwirkende Radialfläche (18) der Radnabe axial vorgespannt ist, wobei Außenring (10) und Lagerinnenring (15) mit einer Dichtung (26) versehen sind, welche wenigstens einen mit dem Lagerinnenring (15) verbundenen und aus Blech bestehenden Dichtring (33) mit im Querschnitt jeweils einem radialen Schenkel (34) und einem axialen Schenkel (36) aufweist, wobei der axiale Schenkel (36) drehfest mit dem Lagerinnenring (15) verbunden und nach axial innen gerichtet ist, wobei der axiale Schenkel (36) des Dichtrings (33) des Lagerinnenrings (15) nach radial innen und nach axial außen umgebogen ist, **dadurch gekennzeichnet, dass** ein freies Ende (38) des axialen Schenkels (36) axial nach außen die Stirnfläche (24) des Lagerinnenrings (15) überragt, wobei das freie Ende (38) des Dichtrings (33) zu einem axial verlaufenden Endschenkel (39) erweitert ist, welcher radial über der Verzahnung (3, 4) und über einem Absatz (40) eines äußeren Gelenkkörpers (7) des Drehgelenks (5) angeordnet ist.

2. Lageranordnung nach Anspruch 1, **dadurch gekennzeichnet, dass** an den Endschenkel (39) ein Dichtungsprofil (41) angeformt ist, welches wenigstens am Absatz (40) und/oder an einer Stirnkante (42) des Gelenkkörpers (7) anliegt.

3. Lageranordnung nach Anspruch 1 oder 2, **dadurch gekennzeichnet, dass** der Endschenkel (39) nach radial innen zu einem Bord (44) abgeknickt ist, welches auf dem Absatz (40) aufliegt.

4. Lageranordnung nach zumindest einem der Ansprüche 1 bis 3, **dadurch gekennzeichnet, dass** in den Endschenkel (39) eine Vielzahl von Ausstanzungen (45) zur Erzeugung von Drehzahl-Signalen eingebracht sind.

5. Lageranordnung nach zumindest einem der Ansprüche 1 bis 4, **dadurch gekennzeichnet, dass** aus dem Endschenkel (39) zur Erzeugung von Drehzahl-Signalen von radial innen nach radial außen eine Vielzahl von Rippen (46) herausgedrückt sind.

6. Lageranordnung nach zumindest einem der Ansprüche 1 bis 5, **dadurch gekennzeichnet, dass** auf dem Endschenkel (39) radial außen ein Profilring (47) angeordnet ist.

7. Lageranordnung nach Anspruch 6, **dadurch gekennzeichnet, dass** der Profilring (47) axial außen eine Dichtlippe (48) aufweist, welche an der Stirnkante (42) des Gelenkkörpers (7) anliegt.

8. Lageranordnung nach Anspruch 6 oder 7, **dadurch gekennzeichnet, dass** der Dichtring (47) aus einem elastomeren oder polymeren Material besteht, in welches ferromagnetische Partikel eingelagert sind.

9. Lageranordnung nach zumindest einem der Ansprüche 1 bis 8, **dadurch gekennzeichnet, dass** das freie Ende (38) des Dichtrings (33) nach radial innen abgewinkelt ist, wobei ein durch die Abwinklung gebildeter Schenkel (49) mit einer axial inneren Fläche (50) an der Stirnfläche (24) des Lagerinnenrings (15) und mit einer axial äußeren Fläche (51) an der Radialfläche (18) des Bundes (17) der Radnabe anliegt.

10. Lageranordnung nach zumindest einem der Ansprüche 1 bis 9, **dadurch gekennzeichnet, dass** axial außen an den radialen Schenkel (34) des Dichtrings (33) ein Ring (43) angebracht ist, welcher aus einem elastomeren oder polymeren Material besteht, in welches ferromagnetische Partikel eingelagert sind.

## Claims

1. Bearing arrangement (1) of a wheel hub (2) of a motor vehicle, which wheel hub (2) can be driven via a rotary joint (5), in which bearing arrangement (1) the wheel hub (2) which is connected to a wheel flange (6) and the rotary joint (5) which is connected to a drive shaft are connected fixedly to one another via a spline system (3, 4) so as to rotate with one another, wherein the spline system (3, 4) is an end serration system, and having a double-row anti-friction bearing (9) which is pulled onto the wheel hub (2) and has at least one separate bearing inner ring (15) which is arranged axially on the outside, is directed at the rotary joint (5), is arranged with an axially outer end face (24) in the region of one end of an axle stub (16) of the wheel hub (2) and is prestressed axially by a radial face (18) of the wheel hub, which radial face (18) acts on the end face (24) of the separate bearing inner ring (15), the outer ring (10) and the bearing inner ring (15) being provided with a seal (26) which has at least one sealing ring (33) which is connected to the bearing inner ring (15) , is composed of sheet metal and has in each case one radial limb (34) and one axial limb (36) in cross section, the axial limb (36) being connected fixedly to the bearing inner ring (15) so as to rotate with it and being directed axially to the inside, wherein the axial limb (36) of the sealing ring (33) of the bearing inner ring (15) is bent over radially to the inside and axially to the outside, **characterised in that** one free end (38) of the axial limb (36) protrudes axially to the outside beyond the end face (24) of the bearing inner ring (15), wherein the free end (38) of the sealing ring (33) is widened to form an axially extending end limb (39) which is arranged radially over the spline system (3, 4) and over a shoulder (40) of an outer joint body (7) of the rotary joint (5).

2. Bearing arrangement according to Claim 1, **characterized in that** a sealing profile (41) which bears at least against the shoulder (40) and/or against an end edge (42) of the joint body (7) is formed integrally on the end limb (39).

3. Bearing arrangement according to Claim 1 or 2, **characterized in that** the end limb (39) is kinked radially to the inside to form a flange (44) which rests on the shoulder (40).

4. Bearing arrangement according to at least one of Claims 1 to 3, **characterized in that** a multiplicity of stamped-out portions (45) for generating rotational-speed signals are made in the end limb (39).

5. Bearing arrangement according to at least one of Claims 1 to 4, **characterized in that** a multiplicity of ribs (46) are pressed out of the end limb (39) from radially on the inside to radially on the outside in order to generate rotational-speed signals.

6. Bearing arrangement according to at least one of Claims 1 to 5, **characterized in that** a profile ring (47) is arranged on the end limb (39) radially on the outside.

7. Bearing arrangement according to Claim 6, **characterized in that**, axially on the outside, the profile ring (47) has a sealing lip (48) which bears against the end edge (42) of the joint body (7).

8. Bearing arrangement according to Claim 6 or 7, **characterized in that** the sealing ring (47) is composed of an elastomeric or polymeric material, into which ferromagnetic particles are incorporated.

9. Bearing arrangement according to at least one of Claims 1 to 8, **characterized in that** the free end (38) of the sealing ring (33) is angled away radially to the inside, a limb (49) which is formed by the angled-away portion bearing with an axially inner face (50) against the end face (24) of the bearing inner ring (15) and with an axially outer face (51) against the radial face (18) of the collar (17) of the wheel hub.

10. Bearing arrangement according to at least one of Claims 1 to 9, **characterized in that** a ring (43) is attached axially on the outside to the radial limb (34) of the sealing ring (33), which ring (43) is composed of an elastomeric or polymeric material, into which ferromagnetic particles are incorporated.

## Revendications

1. Agencement de palier (1) d'un moyeu de roue (2) d'un véhicule automobile pouvant être entraîné par une articulation tournante (5), le moyeu de roue (2) connecté à un flasque de roue (6) et l'articulation tournante (5) connectée à un arbre d'entraînement étant connectés de manière solidaire en rotation l'un à l'autre au moyen d'une denture (3, 4), la denture (3, 4) étant une denture droite de Hirth, et comprenant un palier à roulement (9) à deux rangées rapporté sur le moyeu de roue (2), avec au moins une bague de palier interne (15) séparée, disposée axialement à l'extérieur et orientée vers l'articulation tournante (5), qui est disposée avec une face frontale axialement extérieure (24) dans la région d'une extrémité d'un bout d'essieu (16) du moyeu de roue (2) et qui est précontrainte axialement par une surface radiale (18) du moyeu de roue agissant sur la face frontale (24) de la bague de palier interne séparée (15),
la bague externe (10) et la bague de palier interne (15) étant pourvues d'une garniture d'étanchéité (26) qui présente au moins une bague d'étanchéité (33) connectée à la bague de palier interne (15) et constituée de tôle, avec, en section transversale, à chaque fois une branche radiale (34) et une branche axiale (36), la branche axiale (36) étant connectée de manière solidaire en rotation à la bague de palier interne (15) et étant orientée axialement vers l'intérieur, la branche axiale (36) de la bague d'étanchéité (33) de la bague de palier interne (15) étant cintrée radialement vers l'intérieur et axialement vers l'extérieur, **caractérisé en ce qu'** une extrémité libre (38) de la branche axiale (36) fait saillie axialement vers l'extérieur au-delà de la face frontale (24) de la bague de palier interne (15), l'extrémité libre (38) de la bague d'étanchéité (33) étant élargie pour former une branche d'extrémité s'étendant axialement (39), laquelle est disposée radialement au-dessus de la denture (3, 4) et au-dessus d'un épaulement (40) d'un corps d'articulation extérieur (7) de l'articulation tournante (5).

2. Agencement de palier selon la revendication 1, **caractérisé en ce qu'**un profilé d'étanchéité (41) est façonné au niveau de la branche d'extrémité (39), lequel profilé d'étanchéité s'applique au moins sur l'épaulement (40) et/ou sur une arête frontale (42) du corps d'articulation (7).

3. Agencement de palier selon la revendication 1 ou 2, **caractérisé en ce que** la branche d'extrémité (39) est coudée radialement vers l'intérieur pour former un bord (44) qui repose sur l'épaulement (40) .

4. Agencement de palier selon au moins l'une quelconque des revendications 1 à 3, **caractérisé en ce que** dans les branches d'extrémité (39) sont pratiqués une pluralité d'estampages (45) pour produire des signaux de vitesse de rotation.

5. Agencement de palier selon au moins l'une quelconque des revendications 1 à 4, **caractérisé en ce que** dans la branche d'extrémité (39) sont repoussées depuis radialement à l'intérieur, vers radialement à l'extérieur, une pluralité de nervures (46) pour produire des signaux de vitesse de rotation.

6. Agencement de palier selon au moins l'une quelconque des revendications 1 à 5, **caractérisé en ce qu'**une bague profilée (47) est disposée radialement à l'extérieur sur la branche d'extrémité (39).

7. Agencement de palier selon la revendication 6, **caractérisé en ce que** la bague profilée (47) présente, axialement à l'extérieur, une lèvre d'étanchéité (48) qui s'applique contre l'arête frontale (42) du corps d'articulation (7).

8. Agencement de palier selon la revendication 6 ou 7, **caractérisé en ce que** la bague d'étanchéité (47) se compose d'un matériau élastomère ou polymère, dans lequel sont incorporées des particules ferromagnétiques.

9. Agencement de palier selon au moins l'une quelconque des revendications 1 à 8, **caractérisé en ce que** l'extrémité libre (38) de la bague d'étanchéité (33) est coudée radialement vers l'intérieur, une branche (49) formée par le coudage s'appliquant avec une surface axialement interne (50) contre la face frontale (24) de la bague de palier interne (15) et avec une surface axialement externe (51) contre la face radiale (18) de l'épaulement (17) du moyeu de roue.

10. Agencement de palier selon au moins l'une quelconque des revendications 1 à 9, **caractérisé en ce qu'**une bague (43) est disposée axialement à l'extérieur sur la branche radiale (34) de la bague d'étanchéité (33), laquelle bague se compose d'un matériau élastomère ou polymère, dans lequel sont incorporées des particules ferromagnétiques.
